# EUROPEAN PATENT APPLICATION

(11) **EP 3 868 551 A1**
(43) Date of publication of application: **25.08.2021**
(21) Application number: 21156349.9
(22) Date of filing: 10.02.2021
(51) Int. Cl.: B32B 5/02, B32B 5/18, B32B 5/24, B60R 13/08, E04C 2/24, E04B 1/94

(54) **BACKING LAYER FOR CONSTRUCTION INSULATING PANELS INCLUDING A COATING WITH WATER REPELLENCE AND FIRE RESISTANCE PROPERTIES**

(30) Priority: 18.02.2020 IT 202000003257
(71) Applicant: Elements S.r.l., 31048 San Biagio di Callalta (TV) (IT)
(72) Inventor: FAOTTO, Ugo, 31048 San Biagio di Callalta, Treviso (IT)
(74) Representative: Pennacchio, Salvatore Giovanni

(57) **Abstract**

The invention relates to a backing layer (10) for a multi-layer insulation construction panel (100), and to the manufacturing method thereof. Such a backing layer comprising:
- a reinforcing layer (1) made of fibrous material,
- at least one coating layer (2) for the reinforcing layer.
Such a coating layer (2) is obtained by applying a compound to the reinforcing layer (1) comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide,
and then drying.

## Description

### TECHNOLOGICAL BACKGROUND OF THE INVENTION

### Field of application

The present invention generally relates to the field of flexible backing layers for multi-layer insulation construction panels, in particular thermally-insulating panels made of an expanded synthetic material, using such a flexible backing layer on one or on both opposite external faces of the panels.

In particular, the invention relates to a backing layer for multi-layer insulation construction panels including a coating having water-repellent and fire-resistant properties.

### Prior art

Multi-layer insulation panels are widely used in building constructions, for example to ensure the thermal insulation of walls, floors, and roofs or coverings in general.

A known insulation construction panel comprises a thermally-insulating layer, for example made of polyurethane foam, interposed between two backing layers adapted to coat the thermally-insulating layer on the major faces thereof (not the outer delimitation or cutting edges).

The backing layers serve a dual purpose: on the one hand, they contain the expansion of the polyurethane foam during the manufacturing of the panel, on the other, they give the formed panel a predetermined shape and thickness and contribute to the dimensional stability and mechanical resistance thereof, for example flexural, knock, abrasion resistance.

Backing layers are known, in turn, made as a multi-layer structure having a reinforcing layer made of fibrous material coated with a finishing layer of the mineral type. Such a finishing layer is typically made from binding resins and inert fillers.

By virtue of the materials of the single reinforcing and finishing layers, and of the overall small thickness, the backing layer (before the application and integration thereof with the thermally-insulating layer of polyurethane foam) is flexible, foldable, and can be wound in rolls without undergoing structural change or damage.

The application and securing of the backing layer on the thermally-insulating layer of polyurethane occurs, for example, by adhesion between the reinforcing layer and the polyurethane layer by means of the polyurethane itself during the expansion.

Such backing layers for insulation panels with mineral finishing layers have the drawback of a low fire-resistance, making them unsuitable in many applications, especially when such insulation construction panels need to be classifiable in the highest Euro-classes for fire-resistance in accordance with standard EN 13501-1.

Furthermore, nowadays, the need is increasingly felt to obtain backing layers for panels, which allow the properties of fire-resistance to be combined with low water absorption in a single product, i.e., ensuring adequate water-repellent levels, which are increasingly required for various construction solutions for coating both internal and external spaces of a building.

### SUMMARY OF THE INVENTION

Therefore, it is the object of the present invention to provide a backing layer for an insulation construction panel having such features as to overcome the drawbacks of the backing layers described with reference to the solutions of the known art, allowing the fire-resistant and water-repellent features to be combined.

In particular, such object is achieved by a backing layer for a multi-layer insulation construction panel according to claim 1, comprising:
- a reinforcing layer made of fibrous material,
- at least one coating layer for the reinforcing layer, and where such at least one coating layer is made by applying a compound directly onto the reinforcing layer or onto a further layer coating such a reinforcing, comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide,
and then drying.

It is a particular object of the invention to provide a backing layer for a thermally-insulating or acoustic insulating panel, including at least one coating layer for the fibrous reinforcing, having such features as to combine the needs for:
- flexibility and windability of the backing layer before the application thereof to the insulation panel,
- mechanical resistance,
- dimensional stability,
- fire-resistance,
- air permeability,
- water-repellence,
- suitability for the industrial manufacturing of the insulation panel made of an expanded/extruded synthetic material, in particular polyurethane foam.

Preferred and advantageous embodiments of the backing layer for a multi-layer insulation construction panel are the subject of the dependent claims.

A method for manufacturing a backing layer for insulation panels also forms the subject of the present invention according to claim 11, as well as the use of inorganic fillers consisting of shell-powder in a compound which is applicable to a fibrous reinforcing layer, to form the coating of a backing layer for panels according to claim 13.

### BRIEF DESCRIPTION OF THE DRAWINGS

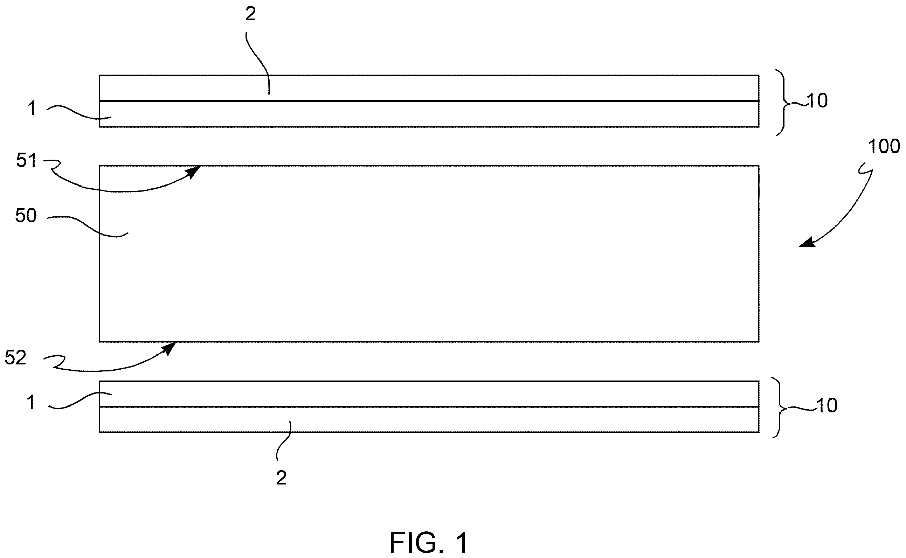

Further features and advantages of the backing layer of a multi-layer insulation construction panel according to the invention will become apparent from the description of preferred embodiments, given by way of a non-limiting example, with reference to **figure 1**, which is a cross-sectional view of a thermally-insulating construction panel according to an embodiment, in which two external backing layers are shown detached from (or not yet joined to) an internal insulation layer made of an expanded synthetic material.

### DETAILED DESCRIPTION

With reference to figure 1, a multi-layer construction panel having properties of thermal and/or acoustic insulation is globally indicated by reference numeral 100.

Advantageously, the insulation panel 100 can be used in the building field for coating and/or thermally and/or acoustically insulating walls, floors, and coverings.

Such an insulation panel 100 comprises a main layer 50 made of insulating material, advantageously of polyurethane foam, having a first surface 51 and a second surface 52 opposite to each other (herein meaning the major surfaces and not the contour surfaces, which highlight the stratification of the panel 100).

By way of advantageous example, the main thermally-insulating layer 50 can be made of polyurethane foam or expanded or extruded polystyrene, or phenolic foam, or fibrous insulating material.

The insulation panel 10 further comprises at least one backing layer 10 connected to the main layer 50 along at least one or both first 51 and second 52 surfaces. In other words, the main layer 50 of the panel is coated on at least one side by the backing layer 10 or interposed between two backing layers 10.

The backing layer 10 comprises a reinforcing layer 1 made of fibrous material and at least one coating layer 2 applied to the reinforcing layer 1.

In an embodiment, the backing layer 10 for panels can comprise two or more coating layers 2, which are similar to one another and applied to the reinforcing layer 1. In particular, a first coating layer 2 is directly applied to the fibrous reinforcing layer 1, a second coating and the successive coatings are applied, in sequence, to the aforesaid first coating layer.

In a different embodiment, the coating layer 2, the subject of the invention, is placed on one or more layers of mineral coating of the known type, which are applied on the fibrous reinforcing layer 1.

Again, in a different embodiment, the coating layer 2 of the invention is directly applied on the fibrous reinforcing layer 1, i.e., it is in contact with the reinforcing, and is then protected by one or more further coating layers of a different type from the coating layer 2.

According to embodiments, the fibrous material of the reinforcing layer 1 can consist of:
- a non-woven fabric, for example consisting of or containing the aforesaid fibrous material,
- a fabric (warp-weft), for example consisting of or containing the aforesaid fibrous material, and/or
- a mesh, for example consisting of or containing the aforesaid fibrous material.

According to an embodiment, the reinforcing layer 1 of the backing layer 10 is made of glass fiber.

According to an advantageous embodiment of the invention, the reinforcing layer 1 is a non-woven fabric made of glass fiber.

In the embodiment shown in figure 1, the reinforcing layer 1 is oriented towards and facing and connected to the respective outer surface 51, 52 of the main layer 50 of the panel 100.

In a different embodiment (not shown), it is the coating layer 2 of the backing layer 10, which is oriented towards and facing and connected to the respective outer surface 51, 52 of the main layer 50 of the panel 100 and not the reinforcing layer 1.

Such a reinforcing layer 1 gives the backing layer 10, and therefore the insulation panel 100, mechanical resistance and/or dimensional stability.

According to an advantageous aspect of the invention, the at least one coating layer 2 of the backing layer 10 for panels is made by applying a compound onto the reinforcing layer 1, comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide,
and then drying.

It should be noted that the inorganic fillers are adapted to increase the volume of the applicable compound, with the advantage of obtaining a significant reduction in the percentage of polymer resin contained in such a compound. This results in lower production costs, suitable rheology and viscosity of the mixture for the processing thereof, increased stress resistance, and greater stability.

According to the invention, the aforesaid shell-powder corpuscles of the coating layer 2 used as fillers for the compound are obtained by grinding shells dried at a temperature above 200°C.

It should be noted that the term corpuscles is used in the present description to indicate granules, slivers, chips, fragments, and similar objects forming the shell-powder, and they are obtained by grinding the dried shells.

In particular, such shells come from the production waste of fisheries, i.e., they represent a recycled material from renewable or environmentally-sustainable sources, the processing of which contributes to the reduction of the environmental impact.

The shell-powder corpuscles of the coating layer 2 have an average diameter of less than 300µm. In particular, the shell-powder corpuscles of the coating layer 2 have an average diameter of less than 200µm.

In further detail, in an advantageous embodiment, the shell-powder corpuscles of the coating layer 2 have an average diameter in the range of 5µm - 150µm, preferably in the range 15µm - 150µm.

In particular, the Applicant has verified that the choice of corpuscles having such dimensions has the advantage of allowing a homogenous distribution of the powder in the mixture and a uniform spreading of the compound on the reinforcing layer 1. Furthermore, such corpuscle dimensions ensure the internal cohesion of the mixture and allow to achieve a compact and homogenous surface of the finished coating 2.

It should be noted that in order to obtain the powder used in the compound, the dried and ground shells consist of calcium carbonate in the two polymorphous forms of aragonite and calcite.

In particular, the percentage of such polymorphous forms of calcium carbonate present in the shell powder usable in the compound of the invention is generally: 90% calcite and 10% aragonite.

The dried shells, as specified above, are ground with a milling system. The powder, thus obtained, is assessed in order to obtain the desired granulometry. The corpuscles of such a powder have highly jagged shapes and an irregular geometry, which is such as to create a wide contact surface and a very strong bond with the polymer matrix of the binder, improving the cohesion and compactness of the applicable compound.

In order to obtain a substantial uniformity of the properties and thickness of the backing layer 10, the coating layer 2 is applied to the reinforcing layer 1 so as to cover the entire surface, in a substantially uniform manner.

In an embodiment, the compound of the coating layer 2 further comprises water and additives.

In an advantageous embodiment, the compound applied to the reinforcing layer 1 for obtaining said coating layer 2 comprises:
- from 5% to 30%, percentages by weight, of said at least one polymer resin in aqueous dispersion;
- from 30% to 75%, percentages by weight, of shell-powder corpuscles;
- from 5% to 60%, percentages by weight, of inorganic flame-retardant fillers selected from the group consisting of aluminum hydroxide, magnesium hydroxide.

In a first particular embodiment, the compound applied to the reinforcing layer 1 for obtaining the aforesaid coating layer 2 comprises:
- 11.50%, percentage by weight, of the at least one polymer resin in aqueous dispersion;
- 56.50%, percentage by weight, of shell-powder corpuscles;
- 10%, percentage by weight, of inorganic flame-retardant fillers selected from the group consisting of aluminum hydroxide, magnesium hydroxide,
- 3.05%, percentage by weight, of additives,
- 18.95%, percentage by weight, of water.

In a second particular embodiment, the compound applied to the reinforcing layer 1 for obtaining the coating layer 2 comprises:
- 11.50%, percentage by weight, of the at least one polymer resin in aqueous dispersion;
- 46.50%, percentage by weight, of shell-powder corpuscles;
- 20%, percentage by weight, of inorganic flame-retardant fillers selected from the group consisting of aluminum hydroxide, magnesium hydroxide,
- 3.05%, percentage by weight, of additives,
- 18.95%, percentage by weight, of water.

The percentages may vary for the addition of water and additives, such as wetting agents, defoamers, dispersants, biocides, thickeners, hydrophobing agents.

In an embodiment, the at least one polymer resin of the coating layer 2 is selected from the group consisting of: styrene resin, acrylic resin, acrylic styrene resin, styrene-butadiene rubber (Styrene-Butadiene Rubber or SBR), vinyl resin, polyurethane resin, ethylene vinyl acetate or EVA and combinations thereof.

In a preferred embodiment, the at least one polymer resin of the coating layer 2 comprises at least one of the following: acrylic styrene, acrylic, SBR.

The manufacturing of the backing layer 10 and then of the insulation panel 100 by applying a coating layer 2 to the fibrous reinforcing layer 1, where such a coating layer comprises an aqueous dispersion of at least one polymer resin with the addition of shell powder and inorganic flame-retardant fillers selected from the group consisting of aluminum hydroxide, magnesium hydroxide, also allows to achieve and mutually combine the needs for:
- flexibility and windability of the backing layer 10 before the application thereof to the insulation panel 100,
- mechanical resistance of the backing layer 10 and the insulation panel 100,
- dimensional stability of the backing layer 10 and the insulation panel 100,
- fire-resistance of the backing layer 10 and the panel 100,
- air permeability of the backing layer 10,
- water-repellence of the backing layer 10 and the panel 100,
- suitability for the industrial manufacturing of the insulation panel 100 made of an expanded/extruded synthetic material, in particular polyurethane foam.

The application and securing of the backing layer 10 on the main layer 50 of the insulation panel 100 occurs, for example, by adhesion between the reinforcing layer 1 (or the coating layer 2) of the backing layer 10 and the main layer 50, for example by means of the same synthetic material, e.g., polyurethane, of the main layer 6 during the expansion.

According to an exemplary embodiment, a method for manufacturing the backing layer 10 of the invention comprises the following steps.

A first step of arranging a reinforcing layer 1 made of fibrous material.

Then, a step of making a coating layer 2 by mixing, and then applying onto the reinforcing layer 1, a compound comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide.
Then, the step of drying the backing layer 10 thus obtained, preferably at a high temperature, is included.

In particular, the step of drying at a high temperature can be carried out by positioning the backing layer 10 in, or causing it to pass through, an oven, for example a hot-air oven, for example at a temperature from 100°C to 250°C.

Furthermore, the method can comprise a step of winding the backing layer 10, forming a roll adapted to be transported and/or used in a system for unwinding the backing layer 10 during the manufacturing of the insulation panel 100.

According to an embodiment, the manufacturing of the backing layer 10 is continuously carried out by means of a system and method of the roll-to-roll type, in which (upstream) the reinforcing layer 1 made of fibrous material is continuously unwound, with (further downstream) the simultaneous application of the coating layer 2 to the unwound reinforcing layer 1, and with (again further downstream) the simultaneous drying of the applied coating layer 2, and with (again further downstream) the rewinding of the backing layer 10 obtained upon drying the coating layer 2.

According to a preferred embodiment, a method for manufacturing the insulation panel 10 comprises the steps of:
- arranging a first backing layer 10, or lower backing layer, for containing the insulating foam;
- applying the foam, still in the liquid phase, to the first backing layer 10 and the next expansion, forming the main layer 50 made of an expanded synthetic material, for example polyurethane,
- before the complete expansion and solidification of the foam, applying a second backing layer 10 or upper backing layer, which can be the same as, or different from the lower one.
It should be noted that the first and/or the second backing layer 10 applied to the main layer 50 made of an expanded synthetic material can have the reinforcing layer 1 oriented towards such a main layer 50. In a different embodiment, the coating layer 2 of such a first and/or second backing layer 10 is oriented towards the main layer 50.

The formation of the main layer 50 can comprise a step of spraying and/or extruding and/or spreading a polymer foam, e.g., polyurethane, on only one first backing layer 10 and then applying a second backing layer 10 to the main polymer layer 50 formed after the expansion of the polymer foam, so that such a main layer 50 of the panel 100 is interposed between the two backing layers 10.
Alternatively, the formation of the main layer 50 can comprise a step of spraying and/or extruding and/or spreading the polymer foam, e.g., polyurethane, in a gap between two of the aforesaid previously made backing layers 10 so that the backing layers 10 form a delimitation for the expansion of the polymer foam, forming the main insulation layer 50.

According to a further embodiment, the step of applying the backing layer 10 can comprise gluing the backing layer 10 on only one or on both opposite first and second surfaces 51, 52 of the formed main layer 50 (e.g., already completely expanded and shaped, or made of fibrous insulating material), with the reinforcing layer 1 facing the main layer 50.

The backing layer 10 for insulation panels 100 of the invention and the manufacturing method thereof offer several advantages.

In fact, the Applicant has verified, through experimental tests, that the applied compound, of which the coating layer 2 of the backing layer 10 of the invention is made, in which the polymer resin in aqueous dispersion incorporates, as fillers, both the shell powder and the flame-retardant fillers, aluminum hydroxide or magnesium hydroxide, has synergistic effects which improve the fire-reaction and water-repellent properties of the coating 2.

Such a synergy is determined, at least in part, by the composition of the calcium carbonate forming the ground shells and in particular by the presence and proportion of the two polymorphous forms of calcium carbonate - aragonite and calcite - in the shells. The presence of both of these polymorphous forms of calcium carbonate in the shell powder allows the shell-powder corpuscles to interact better with the flame-retardant fillers and with the polymer resin, compared to the use of quarry calcium carbonate, which essentially consists of calcite.

Furthermore, the use of shell powder as a filler for the compound forming the coating 2 also exceeds the technical prejudice according to which the use of material from a biological source, i.e., including organic residues, can reduce the fire-reaction performance of such a material.

Such a technical prejudice is overcome as the shell-powder corpuscles used in the applied compound are obtained from ground shells, which have also undergone the drying procedure at a temperature of over 200°C which eliminates such residues.

In confirmation of the above, the Applicant has carried out some experimental tests to assess the fire-reaction tendency of the coating 2 of the backing layer 10 for panels, which is applied and dried on a glass fiber reinforcing 1 layer.

In particular, the ignitability of a backing layer subjected to the direct connection of a flame was first measured according to standard EN 11925-2. The test was carried out using a single flame.

Then, the backing layer 10 for panels was classified according to standard EN 13501-1 (fire classification of construction elements and products) based on the results of the fire-reaction tests.

The results of such tests evidenced that the backing layer 10 for panels of the invention including the coating layer 2 described above, can be classified in fire-reaction class E, both as regards the test carried out on the surface and for the test carried out on the edge.

The length of the developed flame is 30mm at the edge, which is very important in order to obtain class E, also for the entire panel comprising the insulating foam.

In fact, the test on the panel 100 is carried out in two modes:
- by applying the flame to the surface of the panel 100 (far from the edges), thus the connection of the fire affects the external coating, i.e., the backing layers 10 and the corresponding coating 2;
- by applying the flame at the edge of the panel 100, thus involving both the backing layer 10 and the foam of the insulating layer 50.
Since the insulating foam is more heat- and-fire-sensitive than the backing layer, therefore than the coating 2, the interaction between the foam and coating and the contribution of the latter in the fire classification of the panel as a whole is very important in the second mode.

On the contrary, the length of the flame developed by a backing layer for panels of the traditional type is longer than 40mm.

Furthermore, the Applicant has carried out experimental tests to assess the water-repellence of the coating 2 of the backing layer 10 for panels, which is applied to a glass fiber reinforcing layer 1 and dried.

In particular, such a property was measured according to the method of determining the water absorption EN ISO 535 Cobb 60.

As is known, water absorption (Cobb index) is indicative of the amount of water, expressed in grams, absorbed through direct contact by the surface of a square meter of material in a head of 1cm of water at a temperature of 23°C and for a predetermined time, in this case, 60 seconds.

Based on the aforesaid test, it was verified that the coating 2 of the backing layer 10 made from the above-described compound containing the shell-powder corpuscles obtains a reduction in Cobb values which is greater than 40% as compared to traditional coatings including standard fillers.

Each of the individual features described by way of example in combination with other features is to be understood as described even irrespective of and in a separate manner, and therefore also applicable to the other described embodiments of the backing layer, the insulation panel 100, and the manufacturing method. These embodiments with alone or in combination with features of other embodiments are expressly considered but not described herein for brevity.

## Claims

1. A backing layer (10) for a multi-layer insulation construction panel (100), comprising:
- a reinforcing layer (1) made of fibrous material,
- at least one coating layer (2) for the reinforcing layer,
wherein said at least one coating layer (2) is made by applying a compound on the reinforcing layer (1) comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide,
and successive drying.

2. A backing layer (10) according to claim 1, wherein said shell-powder corpuscles of the at least one coating layer (2) are obtained by grinding shells dried at a temperature above 200°C.

3. A backing layer (10) according to claim 1 or 2, wherein said shell-powder corpuscles of the at least one coating layer (2) have an average diameter of less than 300pm.

4. A backing layer (10) according to claim 1, wherein said compound of the at least one coating layer (2) further comprises water and additives.

5. A backing layer (10) according to any one of the claims 1-3, wherein said compound applied on the reinforcing layer (1) to obtain said at least one coating layer (2) comprises:
- from 5% to 30%, percentages by weight, of said at least one polymer resin in aqueous dispersion;
- from 30% to 75%, percentages by weight, of shell-powder corpuscles;
- from 5% to 60%, percentages by weight, of inorganic flame-retardant fillers selected from the group consisting of aluminum hydroxide, magnesium hydroxide.

6. A backing layer (10) according to any one of the claims 1-4, wherein said compound applied on the reinforcing layer (1) to obtain said at least one coating layer (2) comprises:
- 11.50%, percentage by weight, of said at least one polymer resin in aqueous dispersion;
- 56.50%, percentage by weight, of shell-powder corpuscles;
- 10%, percentage by weight, of inorganic flame-retardant fillers selected from the group consisting of aluminum hydroxide, magnesium hydroxide,
- 3.05%, percentage by weight, of additives,
- 18.95%, percentage by weight, of water.

7. A backing layer (10) according to any one of the claims 1-4, wherein said compound applied on the reinforcing layer (1) to obtain said at least one coating layer (2) comprises:
- 11.50%, percentage by weight, of said at least one polymer resin in aqueous dispersion;
- 46.50%, percentage by weight, of shell-powder corpuscles;
- 20%, percentage by weight, of inorganic flame-retardant fillers selected from the group consisting of aluminum hydroxide, magnesium hydroxide,
- 3.05%, percentage by weight, of additives,
- 18.95%, percentage by weight, of water.

8. A backing layer (10) according to any one of the preceding claims, wherein said at least one polymer resin of the coating layer (2) is selected from the group consisting of: styrene resin, acrylic resin, acrylic styrol resin, SBR, vinyl resin, polyurethane resin, EVA.

9. A backing layer (10) according to any one of the preceding claims, wherein the fibrous material of the reinforcing layer (1) is selected from the group consisting of:
- non-woven fabric,
- fabric (warp-weft),
- mesh.

10. A backing layer (10) according to any one of the claims 1-8, wherein said reinforcing layer (1) made of fibrous material is a non-woven fabric made of glass fiber.

11. A method of manufacturing a backing layer (10) for a multi-layer insulation construction panel (100), comprising the steps of:
- providing a reinforcing layer (1) made of fibrous material;
- obtaining at least one coating layer (2), said step comprising the steps of:
- mixing a compound comprising:
- at least one polymer resin in aqueous dispersion,
- inorganic fillers consisting of shell-powder corpuscles,
- inorganic flame-retardant fillers selected from the group consisting of aluminum hydroxide, magnesium hydroxide;
- applying said compound on the reinforcing layer (1);
- drying said backing layer (10).

12. A method of manufacturing a backing layer (10) according to claim 11, wherein said drying step is carried out by positioning the backing layer (10) in a hot-air oven, at a temperature from 100°C to 250°C.

13. Use of inorganic fillers consisting of shell-powder corpuscles in addition to:
at least one polymer resin in aqueous dispersion, and
inorganic flame-retardant fillers selected from the group consisting of aluminum hydroxide, magnesium hydroxide,
to obtain a compound which is applicable on a reinforcing layer (1) made of fibrous material to form a coating layer (2) of a backing (10) for a multi-layer insulation construction panel (100).

14. A multi-layer insulation construction panel (100), comprising:
- a main layer (50) made of thermally insulating material comprising a first surface (51) and an opposite second surface (52),
- a backing layer (10) according to any one of the claims 1-10 connected to said main layer (50) made of thermally insulating material along at least one of said first and second surfaces (51, 52), with the reinforcing layer (1) made of fibrous material facing the main layer (50) made of thermally insulating material.

15. A multi-layer insulation construction panel (100), comprising:
- a main layer (50) made of thermally insulating material comprising a first surface (51) and an opposite second surface (52),
- a backing layer (10) according to any one of the claims 1-10 connected to said main layer (50) made of thermally insulating material along at least one of said first and second surfaces (51, 52) with the coating layer (2) of the reinforcing layer (1) facing the main layer (50) made of thermally insulating material.
